# EUROPEAN PATENT SPECIFICATION

(11) **EP 2 192 817 B1**
(45) Date of publication and mention of the grant of the patent: **27.03.2013**
(21) Application number: 08843190.3
(22) Date of filing: 17.10.2008
(51) Int. Cl.: H04W 84/02, H04L 29/06

(54) **BROADCAST SERVICE (BC) IMPROVING METHOD, DEVICE AND SYSTEM**
VERFAHREN, VORRICHTUNG UND SYSTEM ZUR VERBESSERUNG EINES RUNDSENDEDIENSTES
PROCÉDÉ, DISPOSITIF ET SYSTÈME D'AMÉLIORATION DE SERVICE DE DIFFUSION (BC)

(30) Priority: 19.10.2007 CN 200710165016; 26.10.2007 CN 200710124091; 21.11.2007 CN 200710186867
(43) Date of publication of application: 02.06.2010
(73) Proprietor: Huawei Technologies Co., Ltd., Longgang District, Shenzhen Guangdong 518129 (CN)
(72) Inventor: ZHONG, Jianfeng, Shenzhen Guangdong 518129 (CN); HE, Xiaoyan, Shenzhen Guangdong 518129 (CN)
(74) Representative: Isarpatent
(86) International application number: PCT/CN2008/072748
(87) International publication number: WO 2009/052762

(56) References cited:
- EP-A1- 1 760 963
- WO-A1-2007/141450
- CN-A- 1 998 182
- CN-A- 101 047 725
- CN-A- 101 047 832
- "Telecommunications and Internet converged Services and Protocols for Advanced Networking (TISPAN); IPTV Architecture; IPTV functions supported by the IMS subsystem; Draft ETSI TS 182 027" ETSI STANDARDS, LIS, SOPHIA ANTIPOLIS CEDEX, FRANCE, vol. TISPAN, no. V0.0.15, 1 September 2007 (2007-09-01), XP014041039 ISSN: 0000-0001
- "Telecommunications and Internet Converged Services and Protocols for Advanced Networking (TISPAN); Resource and Admission Control Sub-system (RACS); Functional Architecture; Release 2; draft ETSI RES 282 003" ETSI STANDARDS, LIS, SOPHIA ANTIPOLIS CEDEX, FRANCE, vol. TISPAN, no. V0.8.9, 1 October 2007 (2007-10-01), XP014039382 ISSN: 0000-0001
- "Telecommunications and Internet Converged Services and Protocols for Advanced Networking (TISPAN); IP Multimedia Subsystem (IMS);Stage 2 TISPAN NGN Release 1 TS.23.228 Release 6 modified; Draft ETSI TS 2XXXXX" ETSI STANDARDS, LIS, SOPHIA ANTIPOLIS CEDEX, FRANCE, no. V 0.0.3, 1 January 2005 (2005-01-01), XP014028797 ISSN: 0000-0001

## Description

### Field of the Invention

The present invention relates to a network technology, and in particular, to a method, a P-CSCF and a resource reservation processing entity for improving Broadcast (BC) services.

### Background of the Invention

An IP Multimedia Subsystem (IMS) is a subsystem overlaid on an existing Packet Switched (PS) domain on a Wideband Code Division Multiple Access (WCDMA) network proposed in R5 of the 3rd Generation Partnership Project (3GPP) standards. The IMS adopts the PS domain as a bearer channel for transmitting upper layer control signaling and media, and introduces the Session Initiation Protocol (SIP) as the service control protocol. By using the features of SIP such as simplicity, scalability, and ease of media combination, the IMS separates the service control from the bearer control, and provides rich multimedia services.

The 3GPP and the Telecommunications and Internet converged Services and Protocols for Advanced Networking (TISPAN) are international standardization organizations that standardize the IMS. The 3GPP researches the IMS from the perspective of mobile access, while the TISPAN proposes requirements for the IMS from the perspective of fixed access. The 3GPP uniformly optimizes the IMS to enable the IMS to control the fixed access and mobile access.

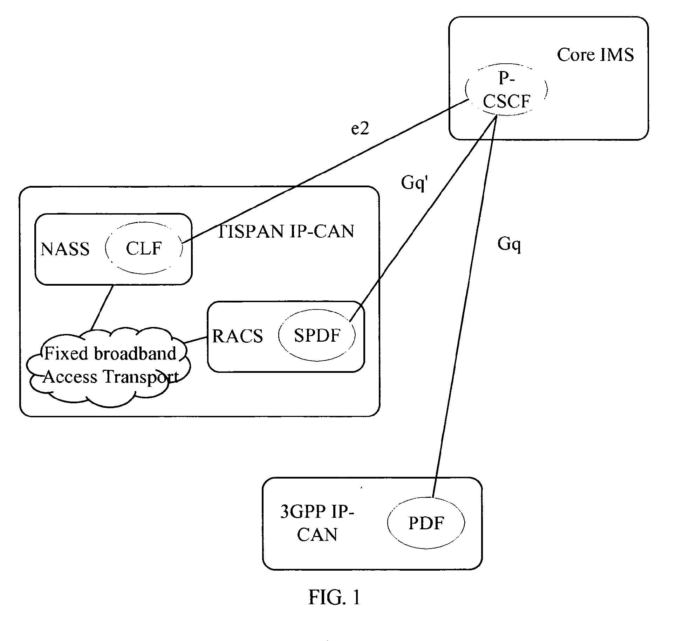

With respect to the architecture, the TISPAN adopts the IMS architecture defined by 3GPP R7. As shown in FIG. 1, the IMS includes a Network Attachment Subsystem (NASS) and a Resource and Admission Control Subsystem (RACS). The TISPAN defines interfaces between the subsystems and the function entities included in the preceding architecture. With respect to protocols, related interface protocols defined by the 3GPP are revised according to the special fixed access requirement; protocols for interfaces between the NASS and external entities are defined; and protocols for interfaces between the RACC and external entities are defined. On the IMS network defined by the 3GPP, the resource reservation entity corresponding to the RACS defined by 3GPP R7 used by the TISPAN is a Gateway GPRS Support Node (GGSN).

To ensure that a session can be set up successfully on the IMS network, a resource reservation mechanism is introduced. With this resource reservation mechanism, the network ensures that resources needed for this session are already reserved for the user in the access network after the session is set up. Thus, the TISPAN specially defines a Gq' interface between a Proxy-Call Session Control Function (P-CSCF) and the RACS. Through the Gq' interface, the network can initiate a resource reservation request.

On the Gq' interface, when the P-CSCF receives a service request and determines that the resource reservation operation needs to be executed, the P-CSCF may generate a command for instructing the RACS to reserve resources according to Session Description Protocol (SDP) information in the service request. Generally, the RACS reserves resources for line m of each media component in the SDP information.

The IMS based Internet Protocol Television (IPTV) provides IPTV services under the overall architecture of the IMS so as to provide users with streaming services and multimedia services that integrate the streaming services and real-time session services by fully using the existing mechanisms on the IMS network, such as registration, authentication, routing, session control and setup, service triggering, charging, end-to-end Quality of Service (QoS) mechanisms. That is, multimedia sessions between the user and contents in the IMS based IPTV are implemented by using the existing session control mechanisms on the IMS network. In addition, during the session setup, bearer resources must be reserved for transmitting media streams.

IPTV functions supported by the IMS subsystem are described in Draft ETSI TS 182 027 V0.0.15 (2007-09).

In the IPTV services, the service request received by the P-CSCF may involve the following cases:
Case 1: The SDP information in the service request includes media description corresponding to media components of each channel in the service package.
Case 2: The service request does not include media description lines corresponding to media components of any channel, but includes only a service package ID requested by a user. That is, when the user subscribes to live services, the user subscribes to a service package. Because a service package may include multiple channels, the IMS based IPTV network may not know what channels the user is watching or wants to watch.

During the implementation of the present invention, the inventor discovers the following weaknesses of the prior art: In the first case, the P-CSCF may reserve resources for each media description line. In BC service mode, however, the user may watch only one channel at the same time, thus wasting a lot of network resources. In the second case, because the P-CSCF cannot know what channels the user wants to watch, the P-CSCF cannot know how many resources need to be reserved for the user. As a result, the service request cannot be processed successfully and network bandwidth resources cannot be reserved, thus failing to meet the bandwidth requirements of the user and affecting the user experience.

### Summary of the Invention

The embodiments of the present invention provide a method, device and system for improving BC services to reserve shared resources in IMS based IPTV services.

As a first aspect of the present invention, a method for improving BC services includes:
receiving, by a P-CSCF, a service layer message, and determining that the service layer message is a BC service request; and
sending, by the P-CSCF, a resource reservation instruction to a resource reservation processing entity, instructing the resource reservation processing entity to allocate resources of the channel that requires the maximum bandwidth to multiple channels in the service package of the BC service..

As a second aspect of the present invention, a P-CSCF includes:
a service layer message parsing unit, adapted to: judge whether the service layer message received is a BC service request, and send a notification message to an instruction generating unit; if the service layer message received from a UE is a BC service request; and
the instruction generating unit, adapted to: after receiving the notification, generate a resource reservation instruction, and send the resource reservation instruction to a resource reservation processing entity to instruct the resource reservation processing entity to allocate resources of the channel that requires the maximum bandwidth to multiple channels in the service package of the BC service for the UE.

As a third aspect of the present invention, a resource reservation processing entity includes:
an instruction parsing unit, adapted to: parse contents included in a resource reservation instruction sent by a P-CSCF, and send the parsed contents to a reservation processing unit; and
the reservation processing unit, adapted to: when receiving the parsed contents, obtain description information of channels subscribed to by a UE according to the parsed contents,
and reserve shared resources for the UE according to the description information, wherein the reserving the shared resources comprises: allocating resources of the channel that requires the maximum bandwidth to multiple channels in the service package of the BC service.

Compared with the prior art, the embodiments of the present invention have the following merits:

When the user initiates the BC service, the P-CSCF sends an instruction to the resource reservation processing entity according to the BC service request initiated by the user, instructing the resource reservation processing entity to reserve specific network resources. Because the user may watch only one channel at the same time, these resources may be shared by channels in the service package, thus saving network resources.

### Brief Description of the Drawings

FIG. 1 shows an IMS architecture used by the TISPAN in the prior art;
FIG. 2 is a flowchart of a method for improving BC services according to a first embodiment of the present invention;
FIG. 3 is a flowchart of a method for improving BC services according to a second embodiment of the present invention;
FIG. 4 is a flowchart of a method for improving BC services according to a third embodiment of the present invention;
FIG. 5 is a flowchart of a method for improving BC services according to a fourth embodiment of the present invention;
FIG. 6 is a flowchart of a method for improving BC services according to a fifth embodiment of the present invention;
FIG. 7 is a flowchart of a method for improving BC services according to a sixth embodiment of the present invention;
FIG. 8 is a flowchart of a method for improving BC services according to a seventh embodiment of the present invention;
FIG. 9 is a flowchart of a method for improving BC services according to an eighth embodiment of the present invention; and
FIG. 10 is a structure of a system for improving BC services according to a ninth embodiment of the present invention.

### Detailed Description of the Embodiments

The embodiments of the present invention provide a method for improving BC services. When a user initiates a BC service request, the P-CSCF sends an instruction to the resource reservation processing entity according to the BC service request, instructing the resource reservation processing entity to reserve specific network resources. Because the user may watch only one channel at the same time, these resources may be shared by channels in the service package. That is, the network allocates the network resources of the channel that requires the maximum bandwidth to multiple channels in the same service package of the BC service. When the user switches between channels, the network does not need to re-allocate the resources, but reuses the previously allocated network resources, so that the resources are shared among the channels, thus saving network resources.

The method for improving BC services in the embodiments of the present invention further includes:
I. A method for carrying a rights list in the BC services, including:
   1. Inform the user of whether the user has the rights to watch a channel according to whether the port number of line m is 0.
      The SCF sets the port number of line m corresponding to the media description of channels that the user has no rights to watch in the BC service session message to 0; the P-CSCF parses the SDP description in the received SIP message, and determines that the user has no rights to use the service corresponding to line m of which the port number is 0 and that the user has the rights to use the service corresponding to line m of which the port number is not 0. In addition, the P-CSCF sends a rights list generated according to the preceding rule to the RACS.
      Or,
   2. Carry the rights list through HTTP link information.
      The SCF adds a rights list to a BC service session message through HTTP links.
      The P-CSCF sends the HTTP link information carried in the SIP message to the RACS; and the RACS obtains the rights list according to the HTTP link information.
      Or,
   3. Carry a rights list through XML information.
      The SCF adds a rights list to a BC service session message through XML information; the P-CSCF parses the XML information in the SIP message, obtains the rights list, and sends the rights list to the RACS.
      Or,
   4. Carry a rights list implicitly by using a service package ID and a public user ID.
      The SCF does not explicitly add a user rights list to the BC service session message; the P-CSCF obtains a service package ID and a public user ID from the SIP message, and sends the service package ID and the public user ID to the RACS; the RACS obtains the rights list according to the service package ID and the public user ID.
II. A method for carrying network parameters in the BC services, including:
   1. Carry network parameters through XML information.
      The SCF adds network parameters corresponding to the service to the BC service session message through XML information; the UE obtains the network parameters by parsing the XML information in the session message.
      Or,
   2. Carry network parameters through HTTP link information.
      The SCF adds HTTP link information to the BC service session message as a network parameter indication corresponding to the service; the UE obtains the network parameters through the HTTP Link information.
      Or,
III. A method for carrying a maximum bandwidth indication in the BC services, including:
   1. The SCF determines a channel that requires the maximum bandwidth, and adds the bandwidth information to the message.
   2. The P-CSCF determines the maximum bandwidth required by a channel subscribed to by the user according to the media description information of each channel in the SDP.
   3. The RACS determines the maximum bandwidth required by a channel subscribed to by the user according to the user ID and the obtained network parameters.
IV. A method for carrying an initial channel or a default channel in the BC services, including:
   1. After obtaining the network parameters, the UE adds only media description of the initial channel or the default channel to an SDP offer.
   2. The SCF initiates an SDP offer, and adds only the media description of the initial channel or the default channel to the SDP offer.
   3. The UE or the SCF adds an instruction, and specifies a channel as the current initial channel or the default channel in the SDP offer.

The preceding methods are described in the embodiments of the present invention. It should be noted that any combination of the preceding methods falls in the scope of protection of the present invention.

To make the present invention clearer, the following describes the present invention with reference to accompanying drawings and exemplary embodiments, and such embodiments are not intended to limit the present invention.

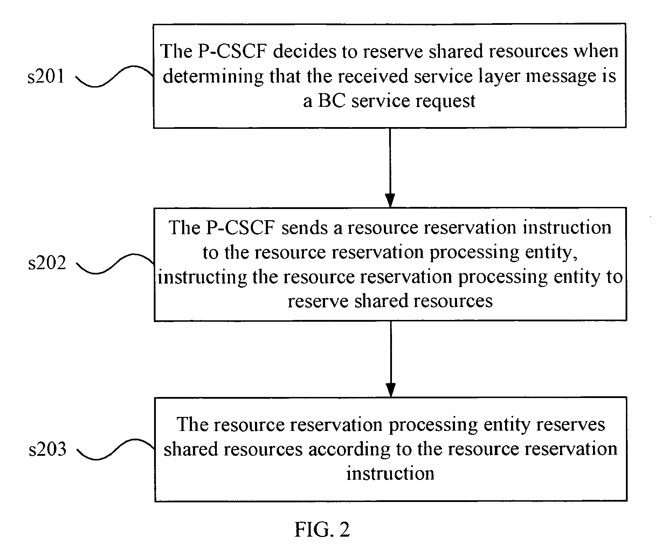

The first embodiment of the present invention provides a method for improving BC services. As shown in FIG. 2, the method includes the following steps:
Step s201: The P-CSCF determines to reserve shared resources when determining that the received service layer message is a BC service request.
Step s202: The P-CSCF sends a resource reservation instruction to the resource reservation processing entity, instructing the resource reservation processing entity to reserve shared resources.
Step s203: The resource reservation processing entity reserves shared resources according to the resource reservation instruction.

In the preceding steps, the resource reservation processing entity may vary with different networks. For example, on an IMS network defined by the TISPAN, the resource reservation processing entity is the RACS; on an IMS network defined by the 3GPP, the resource reservation processing entity is the GGSN. In the following embodiments, the implementation of the present invention is described based on the fact that the resource reservation processing entity is the RACS.

The following further describes a method for improving BC services with reference to specific scenarios.

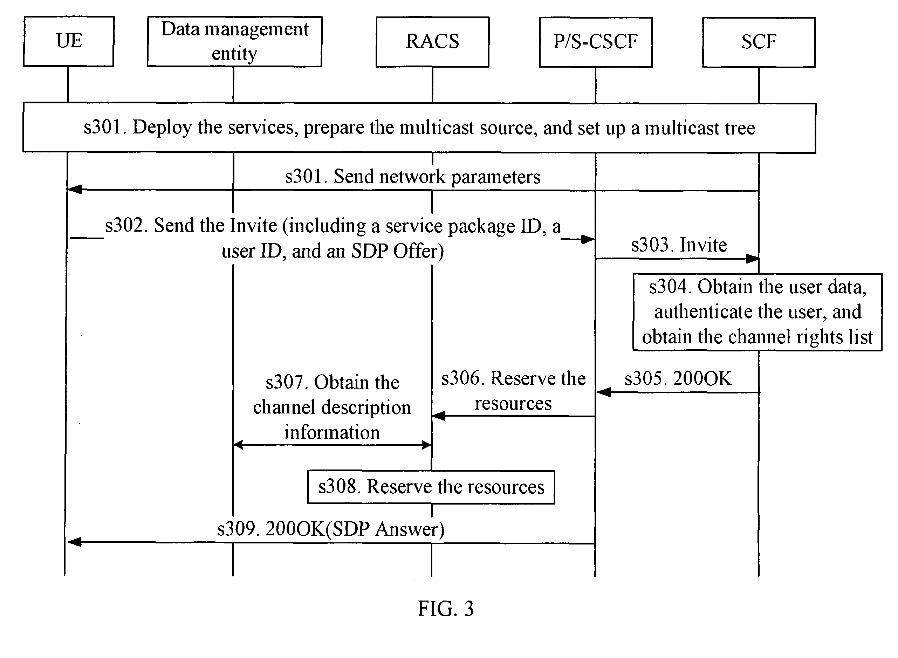

The second embodiment of the present invention provides a method for improving BC services supposing the UE already obtains related network parameters before initiating a BC service request. As shown in FIG. 3, the method includes the following steps:
Step s301: Deploy services, prepare the multicast source, manage the relationship between multicast addresses and channels, and set up a multicast tree. During the service discovery of the Service Control Function (SCF), the SCF sends the network parameters (including a multicast address) to the UE. The preceding network parameters include one or more of the following: multicast address, quality information, bandwidth information, coding and decoding information, default language information, and caption information.
Step s302: The UE initiates a service layer message request (Invite) to the P-CSCF, where the Invite carries a service package ID, a public user ID, and an SDP offer.

The preceding Invite further carries a BC service instruction in one of the following modes or any combination thereof:
(1) Carrying a channel ID required by the user in the SIP URI parameter filled in the RequestURI;
(2) Carrying channel ID information in the media description in the SDP to indicate which media lines are associated with the same channel;
(3) Carrying related SIP header fields or parameters in the Invite to indicate that the Invite is a BC service request, for example, the P-Preferred_Service header field or P-Asserted-Service header field; and
(4) Carrying session level parameter information in the SDP description of the Invite to indicate that the Invite is a BC service request.

Step s303: The P-CSCF forwards the Invite to the S-CSCF. After receiving the Invite, the S-CSCF forwards the Invite to the SCF.
Step s304: The SCF obtains the IPTV Profile data of the UE (may be stored in the SCF), authenticates the IPTV service of the UE, and obtains a list of UE rights on a series of BC channels.
Step s305: The SCF returns a 200 OK message to the Serving-CSCF (S-CSCF), where the 200 OK message carries specific media information (including multicast address, bandwidth, and coding and decoding information) of channels that the user has the rights to watch, and sets the port number of the media lines of channels that the user has no rights to watch to 0.
Step s306: The S-CSCF forwards the 200 OK message to the P-CSCF. At this time, the P-CSCF determines to reserve resources, and determines that the Invite is a BC service request according to the information described in step s302 (this judgment may also be made after the P-CSCF receives the service request in step s302). Then, the P-CSCF sends a resource reservation request to the RACS, requesting the RACS to reserve resources and indicating that the resources are shared by multiple channels. The preceding resource reservation request that the P-CSCF sends to the RACS may use the following mode:
   (1) Carrying a service package ID and a user ID in the resource reservation request, where the service package ID is the RequestURI of the request and the user ID is the public user ID; or
   (2) Carrying a service package ID, a user ID, and one or multiple media description elements (Media-Component-Description) corresponding to media components of a channel that requires the maximum bandwidth in the resource reservation request; or
   (3) Carrying a service package ID, one or multiple Media-Component-Description elements corresponding to media components of a channel that requires the maximum bandwidth, and a rights list in the resource reservation request.

The P-CSCF determines the rights list by judging the port information of line m corresponding to the media description in the received message. If the port number of line m corresponding to the media description is 0, it indicates that the user has no rights to watch the channel; otherwise it indicates that the user has the rights to watch the channel. The P-CSCF may add only the information (for example, channel ID and multicast address) of channels that the user has the rights to watch, to the rights list.

The P-CSCF may determine a channel that requires the maximum bandwidth through comparison. Or the SCF returns a clear instruction in the message, and the P-CSCF senses the channel that requires the maximum bandwidth according to the instruction.

Step s307: The RACS determines that the resource reservation request is initiated for the BC service according to the service package ID in the resource reservation request, and then performs special resource reservation operations.

If the RACS does not obtain the rights list from the P-CSCF, the RACS sends a query request to a data management entity on the network, for example, a User Profile Server Function (UPSF), where the query request carries a user ID and a service package ID; the data management entity returns description of channels subscribed to by the user in the service package to the RACS. If the RACS already obtains the rights list, this query step is omitted.
Step s308: The RACS reserves resources according to the requirement of the channel that requires the maximum bandwidth, and controls the rights of the user to join a multicast group or switch the channel by using the rights list.
Step s309: The P-CSCF returns a 200 OK message to the UE. Step s305 and step s308 may be executed in any sequence.

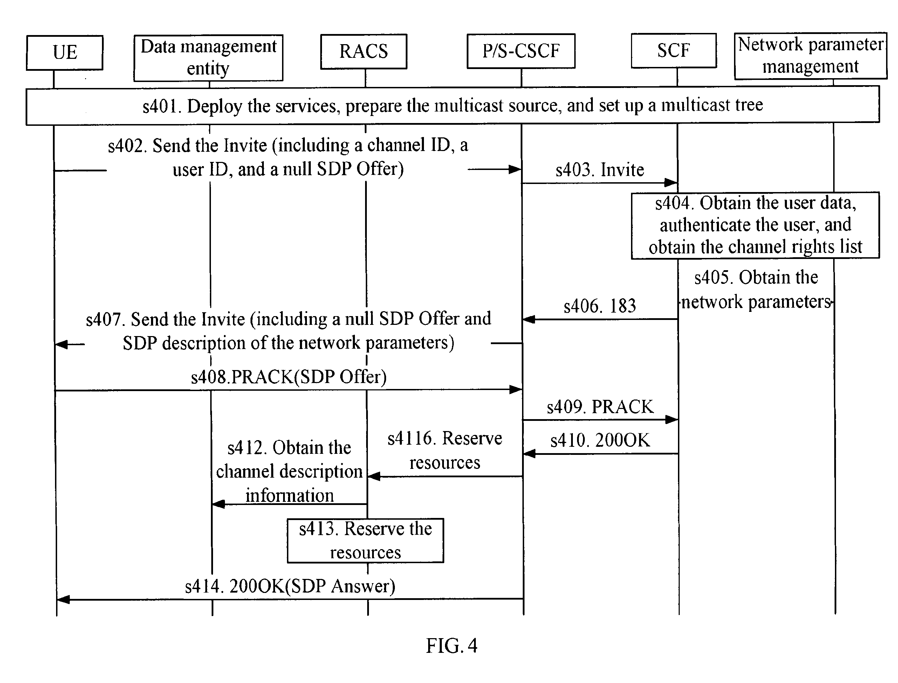

The third embodiment of the present invention describes a method for improving BC services supposing the UE does not obtain related network parameters before initiating a BC service request but obtains parameters during the session setup process. As shown in FIG. 4, the method includes the following steps:
Step s401: Deploy the service, prepare the multicast source, manage the relationship between multicast addresses and channels, and set up a multicast tree.
Step s402: The UE initiates a service layer message request (Invite) to the P-CSCF, where the Invite carries a service package ID, a user ID, and a null SDP offer.

The preceding Invite further carries a BC service instruction. The BC service instruction may be carried in one of the following modes or any combination thereof:
(1) Carrying a channel ID required by the user in the SIP URI parameter included in the RequestURI;
(2) Carrying related SIP header fields or parameters in the Invite, where these related SIP header fields or parameters indicate that the Invite is a BC service request, for example, the P-Preferred_Service header field or P-Asserted-Service header field.

Step s403: The P-CSCF forwards the Invite to the S-CSCF. After receiving the Invite, the S-CSCF forwards the Invite to the SCF.
Step s404: The SCF obtains the IPTV Profile data of the user (may be stored in the SCF), authenticates the IPTV service of the user, and obtains a list of user rights on a series of BC channels.
Step s405: The SCF obtains network parameters from the network parameter management entity.

The preceding network parameters include one or more of the following: multicast address, quality information, bandwidth information, coding and decoding information, default language information, and caption information.
Step s406: The SCF returns a 183 response to the S-CSCF. The SDP answer carried in the 183 response may be specially set; for example, the port number of line m is set to 0. The SDP description information is carried through XML or HTTP link information. The network parameters obtained in step s405 are carried in the SDP description information.
Step s407: The S-CSCF forwards the 183 response to the P-CSCF; the P-CSCF returns the 183 response to the UE.
Step s408: The UE returns a PRACK to the P-CSCF, where the PRACK carries an SDP offer generated according to the received network parameters, that is, the network parameters carried in the preceding 183 response.

Optionally, the PRACK may also carry a BC service instruction, where the BC service instruction may be carried in one of the following modes or any combination thereof:
(1) Carrying channel ID information in the SDP media description to indicate which media lines are associated with the same channel;
(2) Carrying session level parameter information in the SDP description of the request to indicate that the Invite is a BC service request.

Step s409: The P-CSCF forwards the PRACK to the S-CSCF; the S-CSCF forwards the PRACK to the SCF.
Step s410: The SCF returns a 200 OK message to the S-CSCF, where the 200 OK carries an SDP answer.
Step s411: The S-CSCF forwards the 200 OK message to the P-CSCF. At this time, the P-CSCF determines to reserve resources, and determines that the request is a BC service request according to the information described in step 2 or step 8 (this judgment may also be made after the P-CSCF receives the service request in step 2 or step 8). Then, the P-CSCF sends a message to the RACS, requesting the RACS to reserve resources and indicating that the resources are shared by multiple channels. The preceding resource reservation request that the P-CSCF sends to the RACS may use the following mode:
   (1) Carrying a service package ID and a user ID in the resource reservation request, where the service package ID is the RequestURI of the request and the user ID is the public user ID; or
   (2) Carrying a service package ID, a user ID, and one or multiple media description elements (Media-Component-Description) corresponding to media components of the channel that requires the maximum bandwidth; or
   (3) Carrying a service package ID, one or multiple Media-Component-Description elements corresponding to media components of a channel that requires the maximum bandwidth, and a rights list in the resource reservation request.

The P-CSCF determines the rights list by judging the port information of line m corresponding to the media description in the received message. If the port number of line m corresponding to the media description is 0, it indicates that the user has no rights to watch the channel; otherwise it indicates that the user has the rights to watch the channel. The P-CSCF may add only the information (for example, channel ID and multicast address) of channels that the user has the rights to watch, to the rights list.

The P-CSCF may determine a channel that requires the maximum bandwidth through comparison. Or the SCF returns a clear instruction in the message, and the P-CSCF senses the channel that requires the maximum bandwidth according to the instruction.
Step s412: After receiving the preceding resource reservation request, the RACS determines that the resource reservation request is a BC service request according to the service package ID included in the resource reservation request, and performs special resource reservation operations. For example, the RACS sends a query request that carries a user ID and a service package ID to a data management entity on the network such as the UPSF when failing to obtain a rights list from the P-CSC; the data management entity returns the description information of channels subscribed to by the user in the service package. If the RACS already obtains the rights list, this query step may be omitted.
Step s413: The RACS reserves resources according to the requirement of a channel that requires the maximum bandwidth, and controls the rights of the user to join a multicast group or switch the channel by using the rights list.
Step s414: The P-CSCF forwards the 200 OK message to the UE. Step s410 and step s414 may be executed in any sequence.

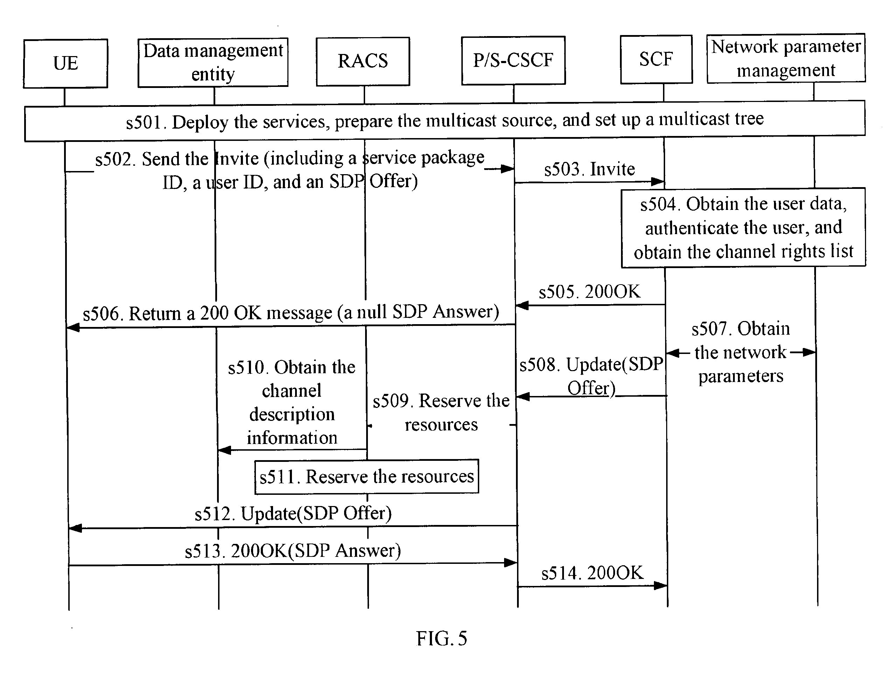

The fourth embodiment of the present invention describes a method for improving BC services supposing the UE does not obtain related network parameters before initiating a BC service request and the network provides required parameters during the session setup process. As shown in FIG. 5, the method includes the following steps:
Step s501: Deploy the service, prepare the multicast source, manage the relationship between multicast addresses and channels, and set up a multicast tree.
Step s502: The UE initiates a service layer message request (Invite) to the P-CSCF, where the Invite carries a service package ID, a user ID, and a null SDP offer.

The preceding Invite further carries a BC service instruction in one of the following modes or any combination thereof:
(1) Carrying a channel ID required by the user in the SIP URI parameter in the RequestURI;
(2) Carrying related SIP header fields or parameters in the Invite, for example, the P-Preferred_Service header field or P-Asserted-Service header field, where these fields or parameters indicate that the Invite is a BC service request.

Step s503: The P-CSCF forwards the Invite to the S-CSCF. After receiving the Invite, the S-CSCF forwards the Invite to the SCF.
Step s504: The SCF obtains the IPTV Profile data (may be stored in the SCF) of the UE, and authenticates the IPTV service of the UE.
Step s505: The SCF returns a 200 OK message to the S-CSCF. The SDP answer carried in the 200 OK message may be specially set; for example, the port number of line m is set to 0.
Step s506: The S-CSCF forwards the 200 OK message to the P-CSCF; the P-CSCF forwards the 200 OK message to the UE.
Step s507: The SCF obtains network parameters of channels subscribed to by the UE from the network parameter management entity.
Step s508: The SCF sends an Update request that carries an SDP offer to the S-CSCF according to the network parameters obtained in step s507. The SDP offer may be carried in the following two modes: (1) The SCF converts the description information of all channels subscribed to by the user into a related SDP offer, and adds the SDP offer to the Update request. At this time, the SCF may also add a maximum bandwidth indication to the Update request to indicate a channel that requires the maximum bandwidth; (2) The SCF finds out a channel that requires the maximum bandwidth by comparing the obtained network parameters, converts the channel description into an SDP offer, and adds the SDP offer to the Update request.

Optionally, the Update request may also carry a BC service instruction, where the BC service instruction may be carried in one of the following modes or any combination thereof:
(1) Carrying channel ID information in the SDP media description to indicate which media lines are associated with the same channel;
(2) Carrying session level parameter information in the SDP description of the request to indicate that the Invite is a BC service request and that resources of each channel must be shared.

Step s509: The P-CSCF receives an Update request. At this time, the P-CSCF determines to reserve resources, and determines that the request is a BC service request (this judgment may also be made when the P-CSCF receives the service request in step s502 or step s508) according to the information in step s502 or step s508. Then, the P-CSCF sends a policy to the RACS, requesting the RACS to reserve resources and indicating that the resources may be shared by multiple channels.

According to the first method for carrying the SDP offer in step s508, the resource reservation request that the P-CSCF sends to the RACS may use the following mode:
(1) Carrying a service package ID and a user ID in the resource reservation request, where the service package ID is the RequestURI of the request and the user ID is the public user ID; or
(2) Carrying a service package ID, a user ID, and one or multiple Media-Component-Description elements corresponding to media components of a channel that requires the maximum bandwidth; or
(3) Carrying a service package ID, one or multiple Media-Component-Description elements corresponding to media components of a channel that requires the maximum bandwidth, and a rights list in the resource reservation request.

The P-CSCF determines the rights list by judging the port information of line m corresponding to the media description in the received message. If the port number of line m corresponding to the media description is 0, it indicates that the user has no rights to watch the channel; otherwise it indicates that the user has the rights to watch the channel. The P-CSCF may add only the information (for example, channel ID and multicast address) of channels that the user has the rights to watch, to the rights list.

The P-CSCF may determine a channel that requires the maximum bandwidth through comparison. Or the SCF returns a clear instruction in the message, and the P-CSCF senses the channel that requires the maximum bandwidth according to the instruction.

According to the second method for carrying the SDP offer in step s508, the resource reservation request that the P-CSCF sends to the RACS may use the following mode:
(1) Carrying a service package ID and a user ID in the resource reservation request, where the service package ID is the RequestURI of the request and the user ID is the public user ID; or
(2) Carrying a service package ID, a user ID, and one or multiple Media-Component-Description elements corresponding to media components of a channel that requires the maximum bandwidth.

Step s510: After receiving the preceding resource reservation request, the RACS determines that the resource reservation request is a BC service request according to the service package ID included in the resource reservation request, and performs special resource reservation operations. For example, the RACS sends a query request that carries a user ID and a service package ID to a data management entity on the network such as the UPSF when failing to obtain a rights list from the P-CSC; the data management entity returns the description information of channels subscribed to by the user in the service package. If the RACS already obtains the rights list, this query step may be omitted.
Step s511: The RACS reserves resources according to the requirement of the channel that requires the maximum bandwidth, and controls the rights of the user to join a multicast group or switch the channel by using the rights list.
Step s512: The P-CSCF forwards the Update request to the UE. Step s509 and step s512 may be executed in any sequence.
Step s513: The UE returns a 200 OK message. After receiving the 200 OK message, the P-CSCF may initiate resource reservation operations according to the SDP answer in the message (optional). This process is the same as step s509 to step s511.
Step s514: The P-CSCF forwards the 200 OK message to the SCF.

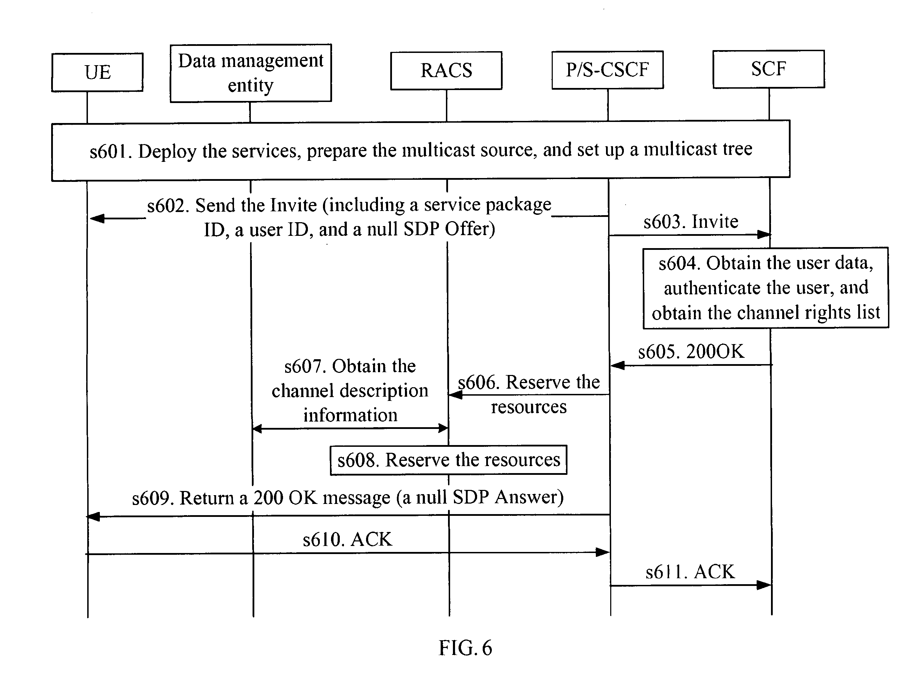

The fifth embodiment of the present invention describes a method for improving BC services supposing the UE does not obtain related network parameters before initiating a BC service request and the RACS queries the data management entity on the network for related network parameters during the session setup process. As shown in FIG. 6, the method includes the following steps:
Step s601: Deploy the service, prepare the multicast source, manage the relationship between multicast addresses and channels, and set up a multicast tree.
Step s602: The UE initiates a service layer message request (Invite) to the P-CSCF, where the Invite carries a service package ID, a user ID, a null SDP offer, and a BC service instruction. The BC service instruction may be carried in one of the following modes or combination thereof:
   (1) Carrying a channel ID required by the user in the SIP URI parameter in the RequestURI; or
   (2) Carrying related SIP header fields or parameters in the Invite to indicate that the request is a BC service request.
Step s603: The P-CSCF forwards the Invite to the S-CSCF. After receiving the Invite, the S-CSCF forwards the Invite to the SCF.
Step s604: The SCF obtains the IPTV Profile data (may be stored in the SCF) of the user, and authenticates the IPTV service of the user.
Step s605: The SCF returns a 200 OK message to the S-CSCF. The SDP answer carried in the 200 OK may be specially set; for example, the port number of line m is set to 0.

The 200 OK message may also carry a network parameter indication, where the indication may be an HTTP URL or XML information. If the indication is the HTTP URL, the URL points to a document in which network parameters of channels subscribed to by the user are stored. This document is stored in an entity on the network, for example, the UPSF or the SCF.
Step s606: The S-CSCF forwards the 200 OK message to the P-CSCF. The P-CSCF determines that the request is a BC service request according to the information in step s602. Although the SDP carried in the request may be specially set (for example, the port number of line m is set to 0), the P-CSCF determines to reserve resources. The resource reservation request that the P-CSCF sends to the RACS may use the following mode:
   (1) Carrying a service package ID and a user ID in the resource reservation request, where the service package ID is the RequestURI of the request and the user ID is the public user ID.
Step s607: After receiving the preceding resource reservation request, the RACS determines that the resource reservation request is a BC service request and that no rights list is included in the resource reservation request according to the service package ID in the resource reservation request. Then, the RACS sends a query request that carries a user ID and a service package ID to a data management entity on the network such as the UPSF; the data management entity returns the description information of channels subscribed to by the user in the service package.
Step s608: The RACS calculates and compares the obtained bandwidths required by the channels, and reserves resources according to the requirement of a channel that requires the maximum bandwidth. In addition, the RACS generates a rights list according to the channels subscribed to by the user, and controls the rights of the user to join a multicast group or switch the channel by using the rights list information.
Step s609: The P-CSCF forwards the 200 OK message to the UE. Step s606 and step s609 may be executed in any sequence.
Step s610 to step s611: The UE returns an ACK response.

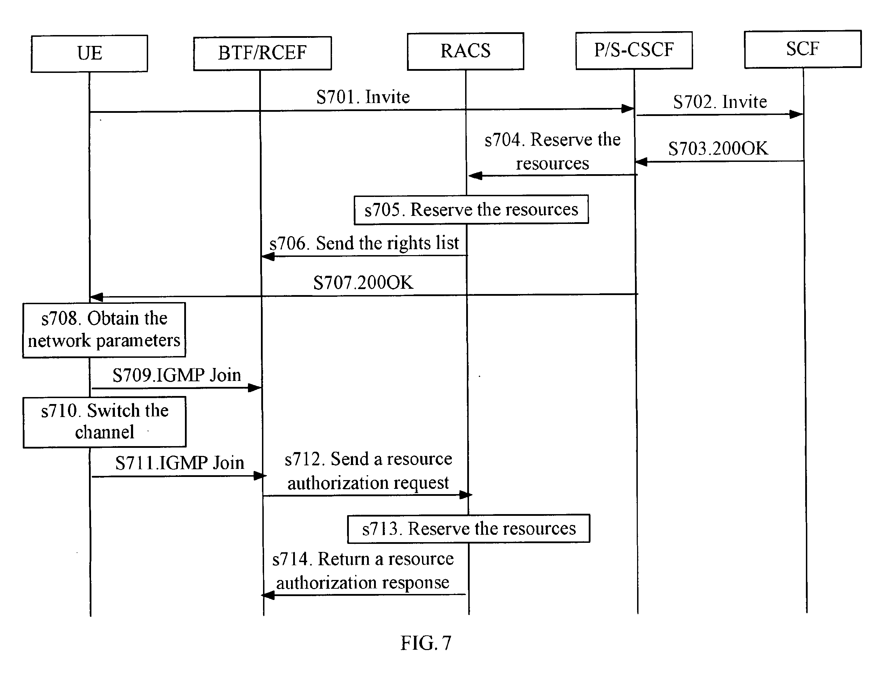

In the prior art, the message package is so long that the SCF cannot judge whether the UE obtains the network parameters from the SSF. To solve this problem, the embodiments of the present invention provide an overall improvement solution. The main idea of the improvement solution provided in the embodiments of the present invention is as follows: The UE always adds its capability information to an initial message no matter whether the UE obtains network parameters from the SSF. The SCF may return media information of the initial channel (or the default channel) and the links of network parameters of all channels in the service package to the UE, where the initial channel may be specified by the user or determined by the SCF according to the system configuration, user information, and local policy. The UE may obtain the network parameters of all the channels according to the links. The P-CSCF needs to identify whether an initial channel is available. If an initial channel is available, the P-CSCF reserves resources according to the initial channel; otherwise the P-CSCF reserves resources according to the maximum bandwidth. If the initial channel is available, the P-CSCF sends the bandwidth of the initial channel and rights list of all the channels (including bandwidth information) to the RACS, instructing the RACS to reserve the bandwidth of the initial channel first. After receiving an Internet Group Management Protocol (IGMP) Join request from the user, the RACS changes the bandwidth according to the authorization of the rights list. When the channel is switched subsequently, the Update request does not need to be initiated at the session layer even if the bandwidth is changed. If the SCF does not add the initial channel information to the response, the SCF should add the maximum bandwidth information of the service package to the SDP (may be at the session level). The bandwidth reservation information sent by the P-CSCF is the maximum bandwidth information carried in the SDP. The preceding overall solution is described in the sixth embodiment of the present invention. As shown in FIG. 7, the method includes the following steps:
Step s701: The UE initiates a BC service setup request that carries the media capability information of the UE (including audio, video and text information) and indicates a service package ID in the URI. The setup request may carry the initial channel information.
Step s702: After receiving the initial setup message from the UE, the P-CSCF or the S-CSCF forwards the message to the SCF.
Step s703: The SCF should add the links of network parameters of all the channels in the service package in a response sent to the P-CSCF. In this case, the network parameters of all the channels do not need to be carried in the SDP, thus shortening the message package. In addition, the media information of the initial channel (may be specified by the user or determined by the SCF according to the system configuration, user information, and local policy) may also be carried in the response. If no initial channel is indicated in the response, the SCF adds the maximum bandwidth information to the service package in the SDP (may be at the session level) of the response.
Step s704: The P-CSCF receives the response returned from the SCF. If the response includes the initial channel information, the P-CSCF obtains the network parameter information of the initial channel, obtains the service package ID from the SIP header field, and sends the network parameter information (such as channel bandwidth in the SDP), service package ID, and authorization information (indicating the authorization of the service package) of the initial channel to the PDF (RACS). If the response does not include the initial channel information, the P-CSCF reserves resources according to the maximum bandwidth information specified by the SCF. When the RACS is configurable, the P-CSCF sends an HTTP link directly, and then the RACS obtains the network parameter information according to the HTTP link.
Step s705: The RACS may obtain the network parameter information and authorization information of all channels in the service package according to the service package ID or the HTTP link. In addition, the RACS reserves the current resources according to the bandwidth information, and authorizes, reserves or changes the resources for subsequent channel switching according to the network parameter information and authorization information of all the channels in the service package.
Step s706: The RACS sends a multicast address list of all authorized channels in the service package to the Broadcast Transport Function/Resource Control Enforcement Function (BTF/RCEF), so that the BTF/RCEF allows the user to join a multicast group represented by these multicast addresses.
Step s707: The P-CSCF transparently transmits the network parameter links to the UE through the response.
Step s708: After receiving the response, the UE initiates a request for obtaining network parameters according to the link in the response if the UE does not obtain the network parameter information from the SSF in advance, and switches the channel according to the obtained network parameter information. If the UE already obtains the network parameters from the SSF, the UE ignores the link information.
Step s709: The UE initiates an IGMP Join message to the BTF/RCEF to join the multicast group of the initial channel and receive traffic streams.
Step s710: The UE initiates a channel switching operation according to the obtained network parameter information. An IGMP Leave message may be included, and is omitted in FIG. 7.
Step s711: The UE initiates a new IGMP Join message to the BTF/RCEF, requesting to join a multicast group represented by new channels.
Step s712: The BTF/RCE requests the RACS for resource authorization according to the fact that the bearer bandwidths of the new channels are different from those of the old channels.
Step s713: The RACS directly processes the channel switching request of the user according to the authorized service package information, changes the resources, and returns a response to the BTF/RCEF.
Step s714: The BTF/RCEF transmits data streams to the user by using new resources.

Note: In the preceding step s710 to step s714, the UE or the SCF may initiate a session change to switch the channel. In this case, the SDP in the session change request for channel switching is only used to negotiate the network parameter information of the channel upon the switching, and the PCSCF initiates a resource change request to the RACS only according to the description of the SDP in the session change request.

It should be noted that the current G' interface cannot be used to transmit the authorization information of a service package in this embodiment. The G' interface must be extended, so that an Attribute-Value Pair (AVP) that represents the authorization information of the service package can be carried via the Diameter protocol. The AVP form may be as follows:
Channel-Auth-List::=<Diameter Header: 543>
<Service Packet Id>
   * {Multicast-Address}
   * {Bandwidth}
   where "*" indicates that the content may be repeated.

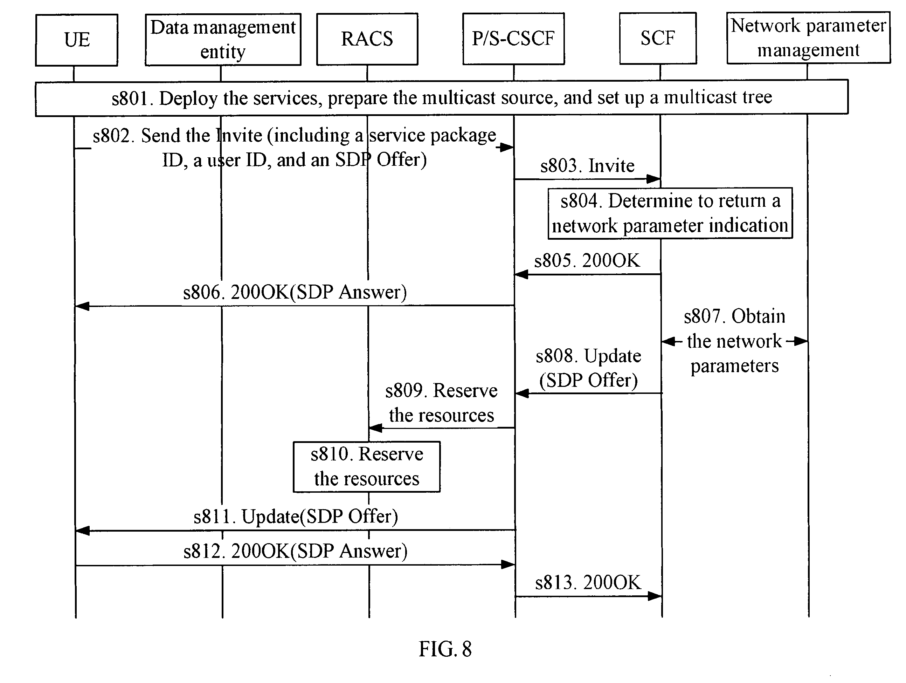

The seventh embodiment of the present invention describes a process of setting up a BC service by initiating a session change and adding media description of the initial channel or the default channel to the SDP offer in the SCF when the UE does not obtain the network parameters. The implementation mode for sending network parameters to the UE through HTTP link or XML information is also described in the SCF. The seventh embodiment of the present invention provides a method for improving BC services. As shown in FIG. 8, the method includes the following steps:
Step s801: Deploy the service, prepare the multicast source, manage the relationship between multicast addresses and channels, and set up a multicast tree.
Step s802: The UE initiates a service layer message request (Invite) to the P-CSCF. The Invite carries a service package ID, a user ID and an SDP offer, where the SDP offer may be specially set; for example, the port number of line m is set to 0.
Step s803: The P-CSCF forwards the Invite to the S-CSCF. After receiving the Invite, the S-CSCF forwards the Invite to the SCF.
Step s804: The SCF determines that the UE does not obtain the network parameters according to the special SDP offer in the Invite, and determines a network parameter indication that should be returned.
Step s805: The SCF returns a 200 OK message that carries an SDP answer to the S-CSCF. The SDP answer may be specially set; for example, the port number of line m is set to 0. In addition, the 200 OK message carries a network parameter indication, where the indication may be an HTTP URL or XML information. If the indication is an HTTP URL, the URL points to a document in which the network parameters of channels subscribed to by the user are stored. This document is stored in an entity on the network, for example, the UPSF or the SCF.
Step s806: The S-CSCF forwards the 200 OK message to the P-CSCF; the P-CSCF forwards the 200 OK message to the UE. After receiving the 200 OK message, the UE may obtain the network parameters of each subscribed channel immediately or later according to the indication (for example, the HTTP URL address) in the 200 OK message.
Step s807: The SCF obtains network parameters of channels subscribed to by the UE from the network parameter management entity. This step is optional, and may also be implemented in step s804.
Step s808: The SCF sends an Update request that carries an SDP offer to the S-CSCF according to the network parameters obtained in step s507. The SDP offer carries the media description information of the default channel or the initial channel. The default channel or the initial channel may be specified by the user or determined by the SCF according to the system configuration, user information, and local policy. The SCF may also add a user rights list to the Update request by using the attribute of line a of the session level.

At this time, the SCF may find a channel that requires the maximum bandwidth subscribed to by the user, and add the bandwidth information of the channel to the SDP offer.

If no network parameter indication is carried in step s805, the network parameter indication may be carried in step s808.
Step s809: After receiving the Update request, the P-CSCF determines to reserve resources. Then, the P-CSCF sends a resource reservation request to the RACS, instructing the RACS to reserve bandwidth resources required by the current default channel or the initial channel in the SDP offer, and sends the rights list to the RACS.
Step s810: After receiving the resource reservation request, the RACS reserves resources for the default channel or the initial channel, and controls the rights of the user to join a multicast group or switch the channel by using the rights list.
Step s811: The P-CSCF forwards the Update request to the UE. Step s509 and step s511 may be executed in any sequence.
Step s812: The UE returns a 200 OK message to the P-CSCF. After receiving the 200 OK message, the P-CSCF may initiate resource reservation operations according to the SDP answer in the message (optional). This process is the same as step s809 to step s811.
Step s813: The P-CSCF forwards the 200 OK message to the SCF.

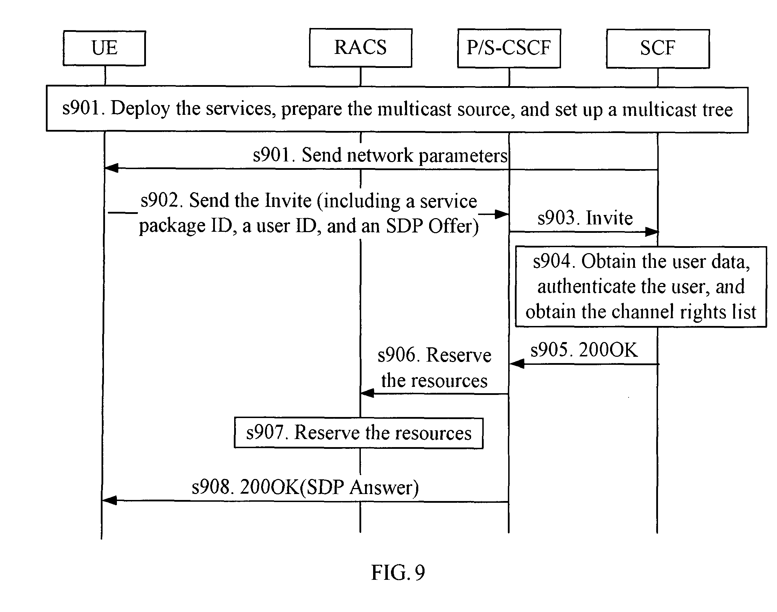

The eighth embodiment of the present invention describes a process of setting up a BC service by carrying only the media description information of the initial channel or the default channel in the initial session setup request when the UE obtains the network parameters. The eighth embodiment of the present invention provides a method for improving BC services. As shown in FIG. 9, the method includes the following steps:
Step s901: Deploy services, prepare the multicast source, manage the relationship between multicast addresses and channels, and set up a multicast tree. During the service discovery of the SCF, the SCF sends the network parameters (including a multicast address) to the UE. The preceding network parameters include one or more of the following: multicast address, quality information, bandwidth information, coding and decoding information, default language information, and caption information.
Step s902: The UE initiates a service layer message request (Invite) to the P-CSCF. The Invite carries a service package ID, a public user ID, and an SDP offer, where the SDP offer includes only the media description of the initial channel or the default channel.
Step s903: The P-CSCF forwards the Invite to the S-CSCF. After receiving the Invite, the S-CSCF forwards the Invite to the SCF.
Step s904: The SCF obtains the IPTV Profile data of the UE (may be stored in the SCF), authenticates the IPTV service of the UE, and obtains a list of user rights on a series of BC channels.
Step s905: The SCF returns a 200 OK message to the S-CSCF, where the 200 OK message carries an SDP answer and a rights list. In this case, the SCF may find a channel that requires the maximum bandwidth subscribed to by the user through comparison, and add the bandwidth information of the channel to the SDP offer.
Step s906: The S-CSCF forwards the 200 OK message to the P-CSCF. At this time, the P-CSCF determines to reserve resources, and sends a resource reservation request (for example, an AAR) to the RACS, requesting the RACS to reserve resources. The resource reservation request that the P-CSCF sends to the RACS may use the following mode:

Carrying one or more Media-Component-Description elements corresponding to the media components of the default channel or the initial channel and a rights list in the resource reservation request, where the bandwidth information may be the bandwidth information of the default channel or the initial channel or the bandwidth information of the channel that requires the maximum bandwidth subscribed to by the user.
Step s907: The RACS reserves resources, and controls the rights of the user to join a multicast group or switch the channel by using the rights list.
Step s908: The P-CSCF returns a 200 OK message to the UE. Step s905 and step s908 may be executed in any sequence.

In the preceding embodiments of the present invention, if the service request includes the SIP header field, it indicates that the service request is a BC service request. Specifically, in this method, an independent SIP header field P-Preferred-Service is used to indicate the type of the service request. After the P-CSCF receives the request, the P-CSCF may determine that the request is an IPTV BC service according to the value of the P-Preferred-Service header field in the request. The following describes an example of using the SIP header field P-Preferred-Service to indicate that the service type is a BC service, in which the field P-Preferred-Service: urn:urn-xxx:broadcast.tispan.iptv indicates that the service request is a BC service request.
INVITE sip:bcservicepakagel @huawei.com;comp=sigcomp SIP/2.0
Via: SIP/2.0/UDP [5555::aaa:bbb:ccc:ddd]:1357;comp=sigcomp;branch= z9hG4bKnashds7
Max-Forwards: 70
P-Access-Network-Info: 3GPP-UTRAN-TDD; utran-cell-id-3gpp=234151D0FCE11
Route: <sip:pcscf1.visited1.net:7531;lr;comp=sigcomp>, <sip:scscf1.home1.net;lr>, <sipacscf2.home2.net;lr>, <sip:pcscf2.visited2.net;lr>
P-Preferred-Identity: "John Doe" <tel:+1-212-555-1111>
Privacy: none
P-Preferred-Service:urn:urn-xxx:broadcast.tispan.iptv
From: <sip:user1_public 1@home1.net>;tag=171828
To: <tel:+1-212-555-2222>;tag=314159
Call-ID: cb03a0s09a2sdfglkj490333
Cseq: 132 INVITE
Require: precondition, sec-agree
Proxy-Require: sec-agree
Supported: 100rel
Contact: <sip:[5555::aaa:bbb:ccc:ddd]:1357;comp=sigcomp>
Allow: INVITE, ACK, CANCEL, BYE, PRACK, UPDATE, REFER, MESSAGE
Security-Verify: ipsec-3gpp; q=0.1; alg=hmac-sha-1-96; spi-c=98765432; spi- s=87654321; port-c=8642; port-s=7531
Content-Type: application/sdp
Content-Length: (...)

Similarly, the P-Asserted-Service header field may also be used to indicate that the service type is a BC service.

In the preceding embodiments of the present invention, in the SDP description in the service request, the session level parameter information indicates that the request is a BC service request and that the allocated resources must be shared among the channels. Specifically, if the session level parameter a is equal to BCShare, it indicates that the request is a BC service request and that the allocated resources must be shared among the channels; if this parameter is equal to channel, it indicates which media lines are associated with the same channel, or if this parameter exists in the SDP of the session change request, it indicates that the changed session still uses the previously allocated resources. For example, when the BC service is switched to the BC with trick play mode, this parameter indicates that the allocated resources in the BC are reused. Then, the P-CSCF sends a request to the RACS according to the preceding information, requesting to reserve resources. Alternatively, if the parameter a is not equal to BCShare, the P-CSCF may know that the request is a BC service request and the resources must be shared according to the information that the parameter a is equal to channel; after finding a channel that requires the maximum bandwidth among these channels, the P-CSCF reserves resources for the channel. The following describes an example of the SDP description in a message indicating that the request is a BC service request and that the allocated resources must be shared among all the channels.
v=0
o=Laura 289083124 289083124 IN IP4 two.example.com
t=0 0
c=IN IP4 131.160.1.112
a=BCShare:FID 1 2
m=audio 30000 RTP/AVP 3
a=rtpmap:3 GSM/8000
b=AS:1200
a=channel:1
m=video 30002 RTP/AVP 97
a=rtpmap:97 AMR/8000
a=fmtp:97 mode-set=0,2,5,7; mode-change-period=2;
mode-change-neighbor; maxframes=1
b=AS:3600
a=channel:2

By using the method provided in the embodiments of the present invention, when the user initiates a BC service request, the P-CSCF sends an instruction to the resource reservation processing entity according to the BC service request, instructing the resource reservation processing entity to reserve specific network resources. Because the user may watch only one channel at the same time, these resources may be shared by channels in the service package. That is, the network allocates the network resources of the channel that requires the maximum bandwidth to multiple channels in the same service package of the BC service. When the user switches between channels, the network does not need to re-allocate the resources, but reuses the previously allocated network resources so that the resources are shared among the channels, thus saving network resources.

It is understandable to those skilled in the art that all or part of the processes of the method in the preceding embodiment of the present invention may be completed by hardware instructed by a computer program. The program may be stored in a computer readable storage medium, and may include processes of the preceding method during execution. The storage medium may be a magnetic disk, a Compact Disk (CD), a Read-Only Memory (ROM) or a Random Access Memory (RAM).

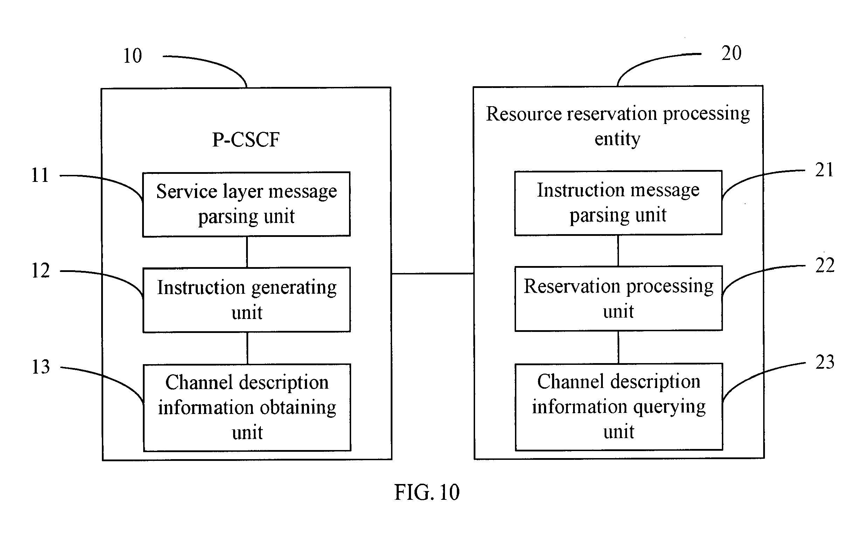

The ninth embodiment of the present invention provides a system for reserving shared resources. As shown in FIG. 10, the system includes a Proxy-Call Session Control Function (P-CSCF) 10 and a resource reservation processing entity 20.

The P-CSCF 10 is adapted to: when determining that the received service layer message is a BC service request, determine to reserve shared resources, and instruct the resource reservation processing entity 20 to reserve shared resources. The resource reservation processing entity 20 is adapted to reserve shared resources according to the resource reservation instruction sent from the P-CSCF 10.

Specifically, the P-CSCF 10 further includes a service layer message parsing unit 11, an instruction generating unit 12, and a channel description information obtaining unit 13.

The service layer message parsing unit 11 is adapted to: judge whether the received service layer message is a BC service request, and send a notification message to the instruction generating unit 12 if the received service layer message is a BC service request. Specifically, the service layer message parsing unit 11 determines that the service layer message is a BC service request when the received service layer message includes one or more of the following contents: (1) The RequestURI of the service layer message includes a channel ID; or (2) The service layer message includes a SIP header field or parameters indicating that the service layer message is a BC service request; or (3) The SDP of the service layer message includes a channel ID; or (4) The SDP of the service layer message carries information indicating that the service layer message is a BC service request.

The instruction generating unit 12 is adapted to: generate a resource reservation instruction when receiving the notification from the service layer message parsing unit 11, and send the resource reservation instruction to the resource reservation processing entity 20. The resource reservation instruction generated by the instruction generating unit 12 may include: (1) a service package ID and a public user ID; (2) a service package ID, a public user ID, and at least a media component, where the media component describes the media components of a channel that requires the maximum bandwidth in the service package; or (3) a service package, one or more media components, and a rights list, where the media components describe the media components of a channel that requires the maximum bandwidth in the service package, and the rights list includes the description information of channels subscribed to by the user in the service package.

The channel description information obtaining unit 13 is adapted to: obtain description information of channels subscribed to by the UE, and send the description information to the instruction generating unit 12, so that the instruction generating unit 12 can generate the resource reservation instruction according to the description information.

The resource reservation processing entity 20 further includes:
an instruction parsing unit 21, adapted to: parse the contents included in the resource reservation instruction sent by the P-CSCF 10, and send the parsed contents to a reservation processing unit 22;
the reservation processing unit 22, adapted to reserve shared resources according to the parsed contents when receiving the parsed contents sent from the instruction parsing unit 21; and
a channel description information querying unit 23, adapted to: when the parsed contents sent by the instruction parsing unit 21 does not include the description information of channels subscribed to by the user in the service package, send a query message to the data management entity on the network, obtain the channel description information in the service package subscribed to by the user, and send the channel description information to the reservation processing unit, so that the reservation processing unit can reserve shared resources according to the channel description information.

The resource reservation processing entity may vary with different networks. For example, on an IMS network defined by the TISPAN, the resource reservation processing entity is the RACS; on an IMS network defined by the 3GPP, the resource reservation processing entity is the GGSN.

By using the system and apparatus provided in the embodiments of the present invention, when the user initiates a BC service request, the P-CSCF sends an instruction to the resource reservation processing entity according to the BC service request, instructing the resource reservation processing entity to reserve specific network resources. Because the user may watch only one channel at the same time, these resources may be shared by channels in the service package. That is, the network allocates the network resources of the channel that requires the maximum bandwidth to multiple channels in the same service package of the BC service. When the user switches between channels, the network does not need to re-allocate the resources, but reuses the previously allocated network resources so that the resources are shared among the channels, thus saving network resources.

Although the present invention has been described through some exemplary embodiments, the invention is not limited to such embodiments. The invention is intended to cover the modifications and variations provided that they fall in the scope of protection defined by the claims or their equivalents.

## Claims

1. A method for improving Broadcast, BC, services, comprising:
Receiving, by a Proxy-Call Session Control Function, P-CSCF, a service layer message, and determining (s201) that the service layer message is a BC service request; and **characterised by** comprising:
sending (s202), by the P-CSCF, a resource reservation instruction to a resource reservation processing entity, instructing the resource reservation processing entity to allocate (s203) resources to multiple channels in a service package in the BC service according to the requirement of the channel that requires the maximum bandwidth.

2. The method of claim 1, further comprising:
obtaining, by the P-CSCF, description information of channels subscribed to by a user equipment, UE, and determining to reserve shared resources for the UE.

3. The method of claim 1, wherein the P-CSCF determines that the service layer message is a BC service request when the service layer message comprises one or more of the following contents:
a Request URI of the service layer message comprises a channel ID;
a Session Initiation Protocol, SIP, header field or parameter indicating that the service layer message is a BC service request;
a session description of the service layer message comprising a channel ID; and
a session description of the service layer message carrying session level parameter information indicating that the service layer message is a BC service request.

4. The method of claim 1, wherein the resource reservation instruction that the P-CSCF sends to the resource reservation processing entity comprises:
a service package ID and a public user ID;
or
a service package ID, a public user ID or at least a media component description, wherein the media component description corresponds to media components of a channel that requires the maximum bandwidth in the service package;
or
a service package ID, one or multiple media component descriptions and a rights list, wherein the media component description corresponds to media components of a channel that requires the maximum bandwidth in the service package, and the rights list comprises description information of channels subscribed to by a User Equipment, UE, in the service package.

5. The method of claim 4, further comprising:
by the P-CSCF, receiving a message sent from a Service Control Function, SCF, and obtaining a rights list that the SCF adds to the message through a Hypertext Transfer Protocol, HTTP, link or Extensible Markup Language, XML;
or
receiving, by the P-CSCF, a message sent from the SCF, and setting, by the SCF, the port number of line m corresponding to the media description of a channel that the UE has no rights to watch to 0; determining, by the P-CSCF, that the UE has no rights to watch the channel corresponding to line m of which the port number is 0 and that the UE has the rights to watch a channel corresponding to line m of which the port number is not 0.

6. The method of claim 5, further comprising:
sending, by the P-CSCF, HTTP link information in the service layer message to the resource reservation processing entity, so that the resource reservation processing entity obtains the rights list by using the HTTP link information;
or
sending, by the P-CSCF, the rights list to the resource reservation processing entity by parsing XML information;
or
sending, by the P-CSCF, a service package ID and a public user ID in the service layer message to the resource reservation processing entity, so that the resource reservation processing entity obtains the rights list by using the service package ID and the public user ID.

7. The method of claim 4, further comprising:
receiving, by the P-CSCF, a message sent from a Service Control Function, SCF, wherein the message comprises an instruction for determining a channel requiring the maximum bandwidth, and determining the channel that requires the maximum bandwidth according to the instruction;
or
determining, by the P-CSCF, a channel that requires the maximum bandwidth among channels subscribed to by the UE according to the description information of channels subscribed to by the UE.

8. The method of claim 1, wherein before the P-CSCF receives the service layer message sent from a user equipment, UE, the method further comprises:
sending, by a network, network parameters corresponding to the BC service to the UE in the following mode: carrying the network parameters corresponding to the BC service in a Session Initiation Protocol, SIP, message through XML information; or carrying the network parameters corresponding to the BC service in the SIP message through HTTP link information.

9. The method of claim 1, further comprising:
adding, by a user equipment, UE, the media description of the initial channel or default channel to the service layer message after obtaining network parameters;
or
adding, by a service Control Function, SCF, the media description of the initial channel or default channel to the service layer message.

10. The method of claim 1, further comprising:
obtaining, by the resource reservation processing entity, description information of channels subscribed to by a user equipment, UE according to the resource reservation instruction, and reserving shared resources for the UE according to the description information.

11. The method of claim 4, wherein when the resource reservation instruction comprises a service package ID and a public user ID, the process that the resource reservation processing entity allocates resources of the channel that requires the maximum bandwidth to multiple channels in the service package of the BC service comprises:
querying, by the resource reservation processing entity, a data management entity on a network for description information of channels subscribed to by the UE in the service package according to the service package ID and the public user ID; and
comparing the bandwidths required by each channel according to the channel description information, obtaining a maximum bandwidth requirement, and reserving shared resources for the UE according to the maximum bandwidth requirement.

12. The method of claim 4, wherein when the resource reservation instruction comprises a service package ID, a public user ID and at least a media component description and the media component describes media components of a channel that requires the maximum bandwidth in the service package, the process that the resource reservation processing entity allocates resources of the channel that requires the maximum bandwidth to multiple channels in the service package of the BC service comprises:
obtaining, by the resource reservation processing entity, media component description information in the resource reservation instruction, and reserving shared resources for the UE according to the media component description information; and
querying a data management entity on a network for description information of channels subscribed to by the UE in the service package according to the service package ID and the public user ID, obtaining the rights list information of the UE from the channel description information, and controlling the rights of the UE to join a multicast group or switch between channels according to the rights list information.

13. A Proxy-Call Session Control Function, P-CSCF, **characterised by** comprising:
a service layer message parsing unit (11), adapted to judge whether a service layer message received is a Broadcast, BC, service request, and send a notification message to an instruction generating unit, if the service layer message received from a User Equipment, UE, is a BC service request; and
the instruction generating unit (12), adapted to generate a resource reservation instruction after receiving the notification, and send the resource reservation instruction to a resource reservation processing entity to instruct the resource reservation processing entity to allocate resources to multiple channels in a service package in the BC service according to the requirement of the channel that requires the maximum bandwidth.

14. A resource reservation processing entity, **characterised by** comprising:
an instruction parsing unit (21), adapted to parse contents in a resource reservation instruction sent by a Proxy-Call Session Control Function, P-CSCF, and send the parsed contents to a reservation processing unit; and
the reservation processing unit (22), adapted to obtain description information of channels subscribed to by a User Equipment, UE, according to the parsed contents when receiving the parsed contents, and reserve shared resources for the UE according to the description information, wherein the reserving the shared resources comprises: allocating resources to multiple channels in a service package in the BC service according to the requirement of the channel that requires the maximum bandwidth.

## Patentansprüche

1. Verfahren zum Verbessern von Rundsendediensten, BC-Diensten, das Folgendes umfasst:
Empfangen durch eine Proxy-Anrufsitzungs-Steuerfunktion, P-CSCF, einer Dienstschichtnachricht und Bestimmen (s201), dass die Dienstschichtnachricht eine BC-Dienstanforderung ist; und **dadurch gekennzeichnet, dass** es Folgendes umfasst:
Senden (s202) durch die P-CSCF einer Betriebsmittelreservierungsanweisung zu einer Betriebsmittelreservierungs-Verarbeitungsentität und Anweisen der Betriebsmittelreservierungs-Verarbeitungsentität, Betriebsmittel an mehrere Kanäle in einem Dienstpaket in dem BC-Dienst in Übereinstimmung mit der Anforderung des Kanals, der die maximale Bandbreite erfordert, zuzuweisen (s203).

2. Verfahren nach Anspruch 1, das ferner Folgendes umfasst:
Erhalten durch die P-CSCF von Beschreibungsinformationen von Kanälen, an denen ein Anwendergerät, UE, teilnimmt, und Bestimmen, gemeinsame Betriebsmittel für das UE zu reservieren.

3. Verfahren nach Anspruch 1, wobei die P-CSCF bestimmt, dass die Dienstschichtnachricht eine BC-Dienstanforderung ist, wenn die Dienstschichtnachricht einen oder mehrere der folgenden Inhalte enthält:
eine Anforderungs-URI der Dienstschichtnachricht enthält eine Kanal-ID;
ein Sitzungsinitiierungsprotokoll-Kopfsatzfeld, SIP-Kopfsatzfeld, oder ein SIP-Parameter geben an, dass die Dienstschichtnachricht eine BC-Dienstanforderung ist;
eine Sitzungsbeschreibung der Dienstschichtnachricht enthält eine Kanal-ID; und
eine Sitzungsbeschreibung der Dienstschichtnachricht führt Sitzungsebenen-Parameterinformationen, die angeben, dass die Dienstschichtnachricht eine BC-Dienstanforderung ist.

4. Verfahren nach Anspruch 1, wobei die Betriebsmittelreservierungsanweisung, die die P-CSCF zu der Betriebsmittelreservierungs-Verarbeitungsentität sendet, Folgendes umfasst:
eine Dienstpaket-ID und eine ID eines öffentlichen Anwenders;
oder
eine Dienstpaket-ID, eine ID eines öffentlichen Anwenders oder wenigstens eine Medienkomponentenbeschreibung, wobei die Medienkomponentenbeschreibung Medienkomponenten eines Kanals entspricht, der die maximale Bandbreite in dem Dienstpaket anfordert,
oder
eine Dienstpaket-ID, eine oder mehrere Medienkomponentenbeschreibungen und eine Rechteliste, wobei die Medienkomponentenbeschreibung Medienkomponenten eines Kanals entspricht, der die maximale Bandbreite in dem Dienstpaket erfordert,
und die Rechteliste Beschreibungsinformationen von Kanälen enthält, an denen ein Anwendergerät, UE, in dem Dienstpaket teilnimmt.

5. Verfahren nach Anspruch 4, das ferner Folgendes umfasst:
durch die P-CSCF Empfangen einer Nachricht, die von einer Dienststeuerfunktion, SCF, gesendet wird, und Erhalten einer Rechteliste, die die SCF zu der Nachricht hinzufügt, mittels einer Hypertextübertragungsprotokoll-Verbindung, HTTP-Verbindung, oder einer erweiterbaren Markup-Sprache, XML;
oder
Empfangen durch die P-CSCF einer Nachricht, die von der SCF gesendet wird, und Einstellen durch die SCF der Port-Nummer einer Leitung m, die der Medienbeschreibung eines Kanals entspricht, für den das UE kein Recht zum Betrachten hat, auf 0; Bestimmen durch die P-CSCF, dass das UE keine Rechte zum Betrachten des Kanals, der einer Leitung m entspricht, für den die Port-Nummer gleich 0 ist, hat und dass das UE Rechte hat, einen Kanal zu betrachten, der einer Leitung m entspricht, deren Port-Nummer nicht 0 ist.

6. Verfahren nach Anspruch 5, das ferner Folgendes umfasst:
Senden durch die P-CSCF von HTTP-Verbindungsinformationen in der Dienstschichtnachricht zu der Betriebsmittelreservierungs-Verarbeitungsentität, so dass die Betriebsmittelreservierungs-Verarbeitungsentität die Rechteliste unter Verwendung der HTTP-Verbindungsinformationen erhält;
oder
Senden durch die P-CSCF der Rechteliste zu der Betriebsmittelreservierungs-Verarbeitungsentität durch syntaktisches Analysieren von XML-Informationen;
oder
Senden durch die P-CSCF einer Dienstpaket-ID und einer ID eines öffentlichen Anwenders in der Dienstschichtnachricht zu der Betriebsmittelreservierungs-Verarbeitungsentität, so dass die Betriebsmittelreservierungs-Verarbeitungsentität die Rechteliste unter Verwendung der Dienstpaket-ID und der ID eines öffentlichen Anwenders erhält.

7. Verfahren nach Anspruch 4, das ferner Folgendes umfasst:
Empfangen durch die P-CSCF einer Nachricht, die von einer Dienststeuerfunktion, SCF, gesendet wird, wobei die Nachricht eine Anweisung enthält, um einen Kanal zu bestimmen, der die maximale Bandbreite erfordert, und Bestimmen des Kanals, der die maximale Bandbreite erfordert, in Übereinstimmung mit der Anweisung;
oder
Bestimmen durch die P-CSCF eines Kanals, der die maximale Bandbreite erfordert, unter Kanälen, an denen das UE teilnimmt, in Übereinstimmung mit den Beschreibungsinformationen von Kanälen, an denen das UE teilnimmt.

8. Verfahren nach Anspruch 1, wobei vor dem Empfang der von einem Anwendergerät, UE, gesendeten Dienstschichtnachricht durch die P-CSCF das Verfahren ferner Folgendes umfasst:
Senden durch ein Netz von Netzparametern, die dem BC-Dienst entsprechen, zu dem UE in dem folgenden Modus: Führen der Netzparameter, die dem BC-Dienst entsprechen, in einer Sitzungsinitüerungsprotokoll-Nachricht, SIP-Nachricht, mittels XML-Informationen; oder Führen der Netzparameter, die dem BC-Dienst entsprechen, in der SIP-Nachricht mittels HTTP-Verbindungsinformationen.

9. Verfahren nach Anspruch 1, das ferner Folgendes umfasst:
Hinzufügen durch ein Anwendergerät, UE, der Medienbeschreibung des anfänglichen Kanals oder voreingestellten Kanals zu der Dienstschichtnachricht, nachdem Netzparameter erhalten worden sind;
oder
Hinzufügen durch eine Dienststeuerfunktion, SCF, der Medienbeschreibung des anfänglichen Kanals oder voreingestellten Kanals zu der Dienstschichtnachricht.

10. Verfahren nach Anspruch 1, das ferner Folgendes umfasst:
Erhalten durch die Betriebsmittelreservierungs-Verarbeitungsentität von Beschreibungsinformationen von Kanälen, an denen ein Anwendergerät, UE, teilnimmt, in Übereinstimmung mit der Betriebsmittelreservierungsanweisung und Reservieren gemeinsam genutzter Betriebsmittel für das UE in Übereinstimmung mit den Beschreibungsinformationen.

11. Verfahren nach Anspruch 4, wobei dann, wenn die Betriebsmittelreservierungsanweisung eine Dienstpaket-ID und eine ID eines öffentlichen Anwenders enthält, der Prozess, in dem die Betriebsmittelreservierungs-Verarbeitungsentität Betriebsmittel des Kanals, der die maximale Bandbreite erfordert, mehreren Kanälen in dem Dienstpaket des BC-Dienstes zuweist, Folgendes umfasst:
Abfragen durch die Betriebsmittelreservierungs-Verarbeitungsentität einer Datenmanagemententität in einem Netz nach Beschreibungsinformationen von Kanälen, an denen das UE in dem Dienstpaket teilnimmt, in Übereinstimmung mit der Dienstpaket-ID und der ID eines öffentlichen Anwenders; und
Vergleichen der Bandbreiten, die von jedem Kanal entsprechend den Kanalbeschreibungsinformationen erfordert werden, Erhalten einer maximalen Bandbreitenanforderung und Reservieren gemeinsam genutzter Betriebsmittel für das UE in Übereinstimmung mit der maximalen Bandbreitenanforderung.

12. Verfahren nach Anspruch 4, wobei dann, wenn die Betriebsmittelreservierungsanweisung eine Dienstpaket-ID, eine ID eines öffentlichen Anwenders und wenigstens eine Medienkomponentenbeschreibung enthält und die Medienkomponente Medienkomponenten eines Kanals beschreibt, der die maximale Bandbreite in dem Dienstpaket erfordert, der Prozess, in dem die Betriebsmittelreservierungs-Verarbeitungsentität Betriebsmittel des Kanals, der die maximale Bandbreite erfordert, mehreren Kanälen in dem Dienstpaket des BC-Diensts zuweist, Folgendes umfasst:
Erhalten durch die Betriebsmittelreservierungs-Verarbeitungsentität von Medienkomponenten-Beschreibungsinformationen in der Betriebsmittelreservierungsanweisung und Reservieren gemeinsam genutzter Betriebsmittel für das UE in Übereinstimmung mit den Medienkomponenten-Beschreibungsinformationen; und
Abfragen einer Datenmanagemententität in einem Netz nach Beschreibungsinformationen von Kanälen, an denen das UE in dem Dienstpaket teilnimmt, in Übereinstimmung mit der Dienstpaket-ID und der ID eines öffentlichen Anwenders, Erhalten der Rechteliste-Informationen des UE aus den Kanalbeschreibungsinformationen und Steuern der Rechte des UE, um in Übereinstimmung mit den Rechteliste-Informationen in eine Multicast-Gruppe einzutreten oder zwischen Kanälen umzuschalten.

13. Proxy-Anrufsitzungs-Steuerfunktion, P-CSCF, **dadurch gekennzeichnet, dass** sie Folgendes umfasst:
eine Einheit (11) zum syntaktischen Analysieren einer Dienstschichtnachricht, die dafür ausgelegt ist zu beurteilen, ob eine empfangene Dienstschichtnachricht eine Rundsende-Dienstanforderung, BC-Dienstanforderung, ist, und eine Meldungsnachricht zu einer Anweisungserzeugungseinheit zu senden, falls die von einem Anwendergerät, UE, empfangene Dienstschichtnachricht eine BC-Dienstanforderung ist; und
die Anweisungserzeugungseinheit (12), die dafür ausgelegt ist, eine Betriebsmittelreservierungsanweisung nach dem Empfangen der Meldung zu erzeugen und die Betriebsmittelreservierungsanweisung zu einer Betriebsmittelreservierungs-Verarbeitungsentität zu senden, um die Betriebsmittelreservierungs-Verarbeitungsentität anzuweisen, Betriebsmittel an mehrere Kanäle in einem Dienstpaket in dem BC-Dienst in Übereinstimmung mit der Anforderung des Kanals, der die maximale Bandbreite erfordert, zuzuweisen.

14. Betriebsmittelreservierungs-Verarbeitungsentität, **dadurch gekennzeichnet, dass** sie Folgendes umfasst:
eine Einheit (21) zum syntaktischen Analysieren von Anweisungen, die dafür ausgelegt ist, Inhalte in einer Betriebsmittelreservierungsanweisung, die von einer Proxy-Anrufsitzungs-Steuerfunktion, P-CSCF, gesendet wird, syntaktisch zu analysieren und die syntaktisch analysierten Inhalte zu einer Reservierungsverarbeitungseinheit zu senden; und
die Reservierungsverarbeitungseinheit (22), die dafür ausgelegt ist, Beschreibungsinformationen von Kanälen, an denen ein Anwendergerät, UE, teilnimmt, in Übereinstimmung mit den syntaktisch analysierten Inhalten zu erhalten, wenn die syntaktisch analysierten Inhalte empfangen werden, und Reservieren gemeinsam genutzter Betriebsmittel für das UE in Übereinstimmung mit den Beschreibungsinformationen, wobei das Reservieren der gemeinsam genutzten Betriebsmittel Folgendes umfasst: Zuweisen von Betriebsmitteln an mehrere Kanäle in einem Dienstpaket in dem BC-Dienst in Übereinstimmung mit der Anforderung des Kanals, der die maximale Bandbreite erfordert.

## Revendications

1. Procédé permettant d'améliorer des services de diffusion, BC, comprenant les étapes suivantes :
recevoir, par une fonction de commande de session d'appel de mandataire, P-CSCF, un message de couche de service, et déterminer (s201) que le message de couche de service est une requête de service BC ; et **caractérisé en ce qu'**il comprend :
envoyer (s202), par le P-CSCF, une instruction de réservation de ressources à une entité de traitement de réservation de ressources, ordonner à l'entité de traitement de réservation de ressources d'attribuer (s203) des ressources à plusieurs canaux dans un paquet de service dans le service BC selon l'exigence du canal qui requiert la bande passante maximum.

2. Procédé selon la revendication 1, comprenant en outre les étapes suivantes :
obtenir, par le P-CSCF, des informations de description de canaux auxquels un équipement utilisateur, UE, a souscrit et déterminer de réserver des ressources partagées pour l'UE.

3. Procédé selon la revendication 1, dans lequel le P-CSCF détermine que le message de couche de service est une requête de service BC lorsque le message de couche de service comprend un ou plusieurs des contenus suivants :
un URI de requête du message de couche de service comprenant un ID de canal ;
un champ d'en-tête de protocole d'initiation de session, SIP, ou un paramètre indiquant que le message de couche de service est une requête de service BC ;
une description de session du message de couche de service comprenant un ID de canal ; et
une description de session du message de couche de service contenant des informations de paramètre de niveau de session indiquant que le message de couche de service est une requête de service BC.

4. Procédé selon la revendication 1, dans lequel l'instruction de réservation de ressources que le P-CSCF envoie à l'entité de traitement de réservation de ressources comprend :
un ID de paquet de service et un ID d'utilisateur public ;
ou
un ID de paquet de service, un ID d'utilisateur public ou au moins une description de composant multimédia, la description de composant multimédia correspondant aux composants multimédia d'un canal qui requiert la bande passante maximum dans le paquet de service ;
ou
un ID de paquet de service, une ou plusieurs descriptions de composant multimédia et une liste de droits, la description de composant multimédia correspondant aux composants multimédia d'un canal qui requiert la bande passante maximum dans le paquet de service, et la liste de droits comprenant des informations de description des canaux auxquels un équipement utilisateur, UE, a souscrit dans le paquet de service.

5. Procédé selon la revendication 4, comprenant en outre les étapes suivantes :
par le P-CSCF, recevoir un message envoyé à partir d'une fonction de commande de service, SCF, et obtenir une liste de droits que le SCF ajoute au message par l'intermédiaire d'une liaison de protocole de transfert hypertexte, HTTP, ou du langage de balisage extensible, XML ;
ou
recevoir, par le P-CSCF, un message envoyé à partir du SCF, et mettre à 0, par le SCF, le numéro de port de la ligne m correspondant à la description multimédia d'un canal que l'UE n'a pas le droit de surveiller ; déterminer, par le P-CSCF, que l'UE n'a pas le droit de surveiller le canal correspondant à la ligne m dont le numéro de port est 0 et que l'UE a le droit de surveiller un canal correspondant à la ligne m dont le numéro de port n'est pas 0.

6. Procédé selon la revendication 5, comprenant en outre les étapes suivantes :
envoyer, par le P-CSCF, des informations de liaison HTTP contenues dans le message de couche de service à l'entité de traitement de réservation de ressources, de telle sorte que l'entité de traitement de réservation de ressources obtienne la liste de droits à l'aide des informations de liaison HTTP ;
ou
envoyer, par le P-CSCF, la liste de droits à l'entité de traitement de réservation de ressources en analysant des informations XML ;
ou
envoyer, par le P-CSCF, un ID de paquet de service et un ID d'utilisateur public contenus dans le message de couche de service à l'entité de traitement de réservation de ressources, de telle sorte que l'entité de traitement de réservation de ressources obtienne la liste de droits à l'aide de l'ID de paquet de service et de l'ID d'utilisateur public.

7. Procédé selon la revendication 4, comprenant en outre les étapes suivantes :
recevoir, par le P-CSCF, un message envoyé à partir d'une fonction de commande de service, SCF, le message comprenant une instruction permettant de déterminer un canal requérant la bande passante maximum, et déterminer le canal qui requiert la bande passante maximum selon l'instruction ;
ou
déterminer, par le P-CSCF, un canal qui requiert la bande passante maximum parmi les canaux auxquels l'UE a souscrit selon les informations de description de canaux auxquels l'UE a souscrit.

8. Procédé selon la revendication 1, comprenant en outre, avant la réception, par le P-CSCF, du message de couche de service envoyé à partir d'un équipement utilisateur, UE, les étapes suivantes :
envoyer, par un réseau, des paramètres réseau correspondant au service BC à l'UE dans le mode suivant : acheminer les paramètres réseau correspondant au service BC dans un message de protocole d'initiation de session, SIP, par l'intermédiaire des informations XML ; ou acheminer les paramètres réseau correspondant au service BC dans le message SIP par l'intermédiaire des informations de liaison HTTP.

9. Procédé selon la revendication 1, comprenant en outre les étapes suivantes :
ajouter, par un équipement utilisateur, UE, la description multimédia du canal initial ou du canal par défaut au message de couche de service après l'obtention des paramètres réseau ;
ou
ajouter, par une fonction de commande de service, SCF, la description multimédia du canal initial ou du canal par défaut au message de couche de service.

10. Procédé selon la revendication 1, comprenant en outre les étapes suivantes :
obtenir, par l'entité de traitement de réservation de ressources, des informations de description des canaux auxquels un équipement utilisateur, UE, a souscrit selon l'instruction de réservation de ressources, et réserver des ressources partagées pour l'UE selon les informations de description.

11. Procédé selon la revendication 4, dans lequel lorsque l'instruction de réservation de ressources comprend un ID de paquet de service et un ID d'utilisateur public, le processus selon lequel l'entité de traitement de réservation de ressources attribue les ressources du canal qui requiert la bande passante maximum à plusieurs canaux dans le paquet de service du service BC comprend les étapes suivantes :
demander, par l'entité de traitement de réservation de ressources, une entité de gestion de données sur un réseau pour des informations de description des canaux auxquels l'UE a souscrit dans le paquet de service selon l'ID de paquet de service et l'ID d'utilisateur public ; et
comparer les bandes passantes requises par chaque canal selon les informations de description de canal, obtenir une bande passante maximum requise, et réserver des ressources partagées pour l'UE selon la bande passante maximum requise.

12. Procédé selon la revendication 4, dans lequel lorsque l'instruction de réservation de ressources comprend un ID de paquet de service, un ID d'utilisateur public et au moins une description de composant multimédia et que le composant multimédia décrit les composants multimédia d'un canal qui requiert la bande passante maximum dans le paquet de service, le processus selon lequel l'entité de traitement de réservation de ressources attribue les ressources du canal qui requiert la bande passante maximum à plusieurs canaux dans le paquet de service du service BC comprend les étapes suivantes :
obtenir, par l'entité de traitement de réservation de ressources, des informations de description de composant multimédia contenues dans l'instruction de réservation de ressources, et réserver des ressources partagées pour l'UE selon les informations de description de composant multimédia ; et
demander à une entité de gestion de données sur un réseau des informations de description des canaux auxquels l'UE a souscrit dans le paquet de service selon l'ID de paquet de service et l'ID d'utilisateur public, obtenir les informations de liste de droits de l'UE à partir des informations de description de canal, et commander les droits de l'UE pour joindre un groupe de multidiffusion ou commuter entre des canaux selon les informations de liste de droits.

13. Fonction de commande de session d'appel de mandataire, P-CSCF, **caractérisée en ce qu'**elle comprend les étapes suivantes :
une unité d'analyse de message de couche de service (11), conçue pour juger si un message de couche de service reçu est une requête de service de diffusion, BC, et
envoyer un message de notification à une unité de génération d'instruction, si le message de couche de service reçu à partir d'un équipement utilisateur, UE, est une requête de service BC ; et
l'unité de génération d'instruction (12), conçue pour générer une instruction de réservation de ressources après la réception de la notification, et envoyer l'instruction de réservation de ressources à une entité de traitement de réservation de ressources pour ordonner à l'entité de traitement de réservation de ressources d'attribuer des ressources à plusieurs canaux dans un paquet de service dans le service BC selon les exigences du canal qui requiert la bande passante maximum.

14. Entité de traitement de réservation de ressources, **caractérisée en ce qu'**elle comprend :
une unité d'analyse d'instruction (21), conçue pour analyser les contenus d'une instruction de réservation de ressources envoyée par une fonction de commande de session d'appel de mandataire, P-CSCF, et envoyer les contenus analysés à une unité de traitement de réservation ; et
l'unité de traitement de réservation (22), conçue pour obtenir des informations de description des canaux auxquels un équipement utilisateur, UE, a souscrit selon les contenus analysés lors de la réception des contenus analysés, et réserver des ressources partagées pour l'UE selon les informations de description, la réservation des ressources partagées comprenant : attribuer des ressources à plusieurs canaux dans un paquet de service dans le service BC selon les exigences du canal qui requiert la bande passante maximum.
